# EUROPEAN PATENT APPLICATION

(11) **EP 2 985 417 A1**
(43) Date of publication of application: **17.02.2016**
(21) Application number: 15180911.8
(22) Date of filing: 13.08.2015
(51) Int. Cl.: F01D 5/18, F01D 9/06, F23R 3/00, F23R 3/06

(54) **GAS TURBINE ENGINE COMPONENT AND WALL**

(30) Priority: 13.08.2014 US 201462036667 P
(71) Applicant: United Technologies Corporation, Hartford, CT 06101 (US)
(72) Inventor: XU, Jinquan, East Greenwich, RI Rhode Island 02818 (US); KOHLI, Atul, Tolland, CT Connecticut 06084 (US); MONGILLO, Dominic J, West Hartford, CT Connecticut 06107 (US); LEVASSEUR, Glenn, Colchester, CT Connecticut 06415 (US); ZELESKY, Mark F, Bolton, CT Connecticut 06043 (US)
(74) Representative: Leckey, David Herbert

(57) **Abstract**

A gas turbine engine component (80; 84) has a cooling hole (82; 86; 106) with a metering section (114). The metering section (114) includes a convex surface (300; 400) and a concave surface (310; 410), with a first arcuate channel (320; 420) connecting an end (301) of the convex surface (300; 400) and an end (311) of the concave surface (310; 410). The end (301) of the convex surface (300; 400) and the end (311) of the concave surface (310; 410) define a dimension (D₁) that is smaller than a diameter (D) of the arcuate channel (320; 420).

## Description

### BACKGROUND

This application relates to cooling holes for use in gas turbine engine components.

Gas turbine engines are known and, typically, include a fan delivering air into a compressor. The air is compressed and delivered into a combustion section. In the combustion section, the air is mixed with fuel and ignited. Products of this combustion pass downstream over turbine rotors, driving them to rotate.

As known, the products of combustion are extremely hot. Thus, turbine rotors and static vanes (which are positioned intermediate rows of turbine rotor blades), seals and many other components, are formed with cooling passages to deliver cooling air to maintain the component at a lower temperature.

Known cooling schemes are extremely precise. In particular, one type of cooling scheme delivers film cooling to the outer surface of a component. As an example, an airfoil in a turbine blade is formed with film cooling holes having a very precisely designed and controlled size and shape, such that air is delivered in desired directions and in desired amounts along an outer surface of the airfoil.

### SUMMARY

In one featured embodiment, a gas turbine engine component has a cooling hole with a metering section. The metering section includes a convex surface and a concave surface, with a first arcuate channel connecting an end of the convex surface and an end of the concave surface. The end of the convex surface and the end of the concave surface define a dimension that is smaller than a diameter of the arcuate channel.

In another embodiment according to any of the previous embodiments, the component comprises a second arcuate channel connecting a second end of the convex surface and a second end of the concave surface.

In another embodiment according to any of the previous embodiments, the first arcuate channel and the second arcuate channel have the same size and shape.

In another embodiment according to any of the previous embodiments, the first arcuate channel and the second arcuate channel have a different size or shape.

In another embodiment according to any of the previous embodiments, the convex surface and the concave surface have differing curvature.

In another embodiment according to any of the previous embodiments, the metering section has a generally constant cross-section.

In another embodiment according to any of the previous embodiments, the cooling hole further comprises a diffusing section downstream of the metering section.

In another embodiment according to any of the previous embodiments, the diffusing section has multiple lobes.

In another embodiment according to any of the previous embodiments, the first arcuate channel is laser-drilled.

In another embodiment according to any of the previous embodiments, the cooling hole is located on a component selected from the group consisting of blade airfoils, vane airfoils, blade platforms, vane platforms, combustor liners, blade outer air seals, blade shrouds, augmentors and endwalls.

In another embodiment according to any of the previous embodiments, a ratio of the dimension to the diameter of the arcuate channel is greater than 1.0.

In another embodiment according to any of the previous embodiments, a ratio of the dimension to the diameter of the arcuate channel is less than or equal to 10.

In another embodiment according to any of the previous embodiments, a center of the first arcuate channel is offset from a point where the convex surface and the concave surface would intersect.

In another embodiment according to any of the previous embodiments, a distance between an apex of the convex surface and an apex of the concave surface defines a second dimension, and wherein the second dimension is greater than a radius of the arcuate channel.

In another embodiment according to any of the previous embodiments, wherein the second dimension is between 5 mils (0.127 millimetres) and 50 mils (1.27 millimetres).

In another embodiment according to any of the previous embodiments, a distance between the center of the arcuate channel and the point where the convex surface and the concave surface would intersect defines a third dimension, and wherein the third dimension is smaller than a radius of the arcuate channel.

In another featured embodiment, a gas turbine engine wall has first and second surfaces, with an inlet at the first surface and an outlet at the second surface. A metering section commences at the inlet, the metering section comprising a first arcuate surface, a second arcuate surface, and a side portion having an arcuate channel connecting the first arcuate surface and the second arcuate surface, defining a dimension. The dimension is smaller than a diameter of the arcuate channel. A diffusing section is in communication with the metering section, and terminates at the outlet.

In another embodiment according to any of the previous embodiments, the first arcuate surface and the second arcuate surface have differing curvature.

In another embodiment according to any of the previous embodiments, the diffusing section comprises multiple lobes.

In another embodiment according to any of the previous embodiments, the second arcuate surface is directly adjacent the lobes at the transition from the metering section to the diffusing section.

In another embodiment according to any of the previous embodiments, the first arcuate surface is convex and the second arcuate surface is concave.

In another embodiment according to any of the previous embodiments, the first arcuate surface is concave and the second arcuate surface is convex.

In another embodiment according to any of the previous embodiments, the arcuate channel extends through of the lobes.

The various features and advantages of this invention will become apparent to those skilled in the art from the following detailed description of an embodiment. The drawings that accompany the detailed description can be briefly described as follows.

### BRIEF DESCRIPTION OF THE DRAWINGS

Figure 1 schematically shows a gas turbine engine.
Figure 2A shows a first component that may incorporate the disclosure of the cooling holes according to this application.
Figure 2B shows a second component that may incorporate the disclosure of the cooling holes according to this application.
Figure 3 shows a schematic view of a wall having a film cooling hole.
Figure 4 shows a cross-sectional view of the cooling hole of Figure 3 taken along line 4-4.
Figure 5A shows a cross-sectional view of the cooling hole of Figure 3 taken along line 5-5.
Figure 5B shows a close-up view of a portion of the cooling hole of Figure 5A.
Figure 6A shows another embodiment of the close-up cooling hole view of Figure 5B
Figure 6B shows another embodiment of the close-up cooling hole view of Figure 5B
Figure 7 shows another embodiment of a wall having a film cooling hole.

### DETAILED DESCRIPTION

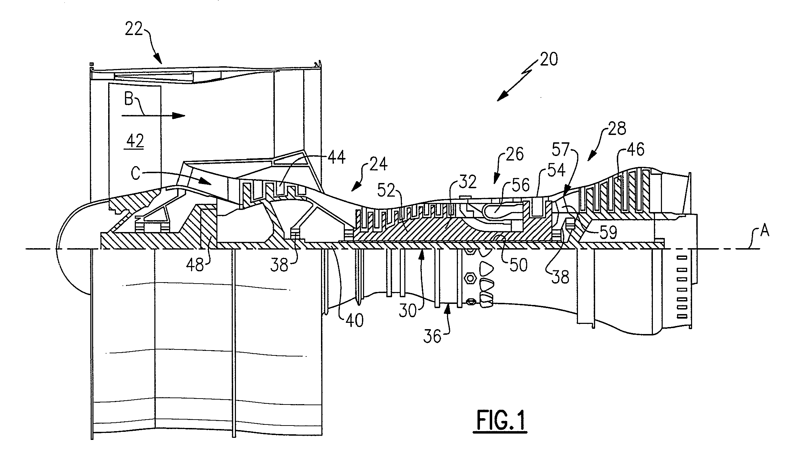

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine engine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 metres). The flight condition of 0.8 Mach and 35,000 ft (10,668 metres), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.52 m/s).

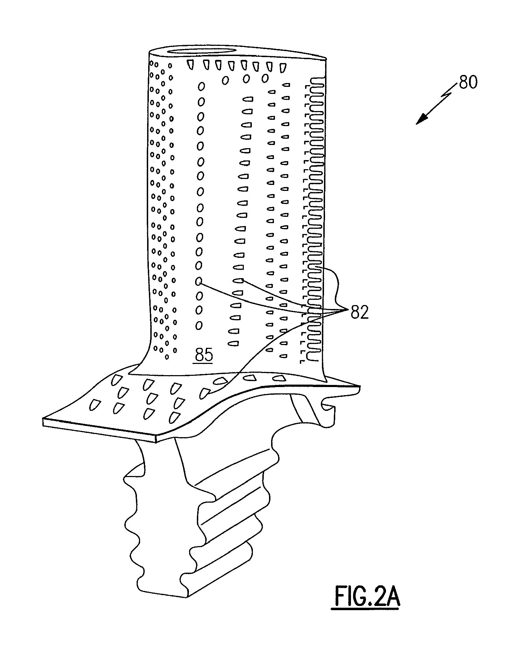

Figure 2A shows a first embodiment 80, which is illustrated as a turbine blade. As known, a plurality of distinct locations for cooling holes 82 may be formed at a surface 85 of the blade 80.

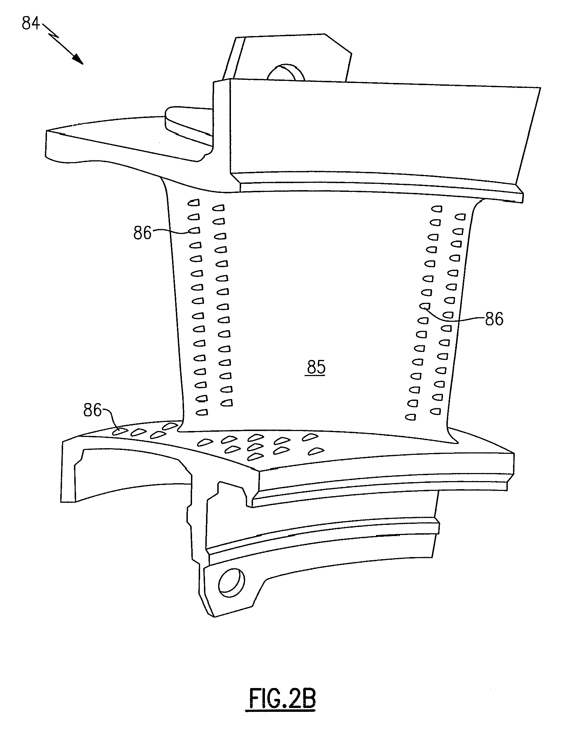

Figure 2B shows a second embodiment 84, which is illustrated as a turbine vane. Again, a plurality of cooling holes 86 are formed in the surface 85.

Any of these cooling holes may benefit from the use of a "clown mouth" shaped metering portion. These cooling holes may be located on components such as blade airfoils, vane airfoils, blade platforms, vane platforms, combustor liners, blade outer air seals, blade shrouds, augmentors, or endwalls. The details of a "clown mouth" metering portion will be discussed below.

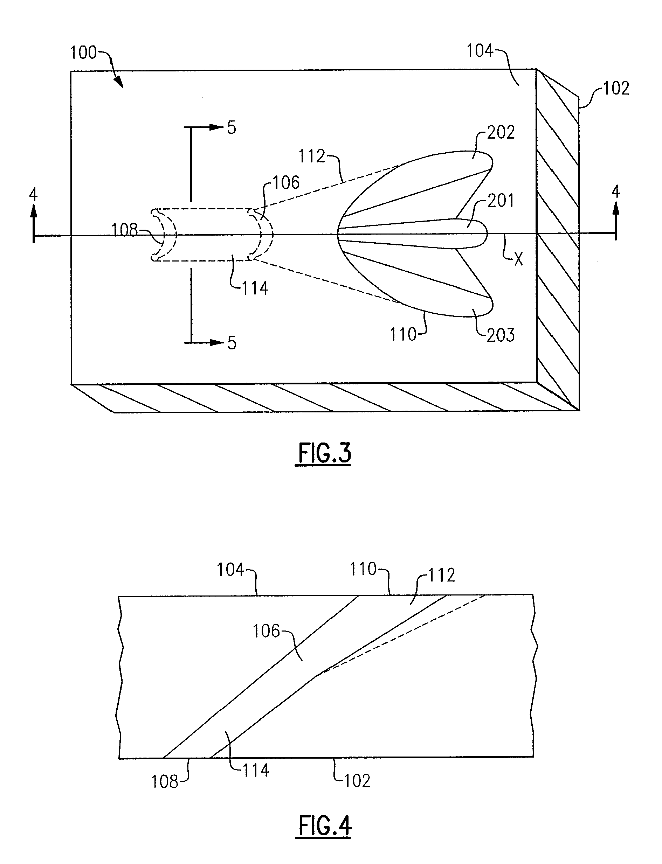

Figure 3 shows a view of a wall of a gas turbine engine component having a cooling hole. Wall 100 includes inner wall surface 102 and outer wall surface 104. In one embodiment, wall 100 is primarily metallic and outer wall surface 104 includes a thermal barrier coating. Cooling hole 106 is oriented such that its inlet 108 is positioned on the inner wall surface 102 and its outlet 110 is positioned on the outer wall surface 104. During gas turbine engine operation, the outer wall surface 104 is in proximity to high temperature gases (e.g., combustion gases, hot air). Cooling air is delivered inside wall 100 where it exits the interior of the component through cooling hole 106 and forms a cooling film on the outer wall surface 104. Cooling hole 106 may be used as any holes 82 or 86, as examples, or elsewhere on gas turbine components.

The inlet 108 positioned at the inner wall surface 102 extends to a metering section 114. The metering section 114 extends further outwardly into an enlarged diffusing section 112. The diffusing section 112 extends from the metering section 114 to the outlet 110, which is positioned at the outer wall surface 104.

Diffusing section 112 is adjacent to and downstream from the metering section 114. Cooling air diffuses within diffusing section 112 before exiting cooling hole 106 at outlet 110 along outer wall surface 104. Diffusing section 112 can have various configurations. In exemplary embodiments, diffusing section has multiple lobes. A first lobe 201 may diverge longitudinally and laterally from the metering section. Second and third lobes, 202, 203 may also diverge longitudinally and laterally from the metering section. In another embodiment, diffusing section has a single lobe. The terms longitudinally and laterally are defined relative to an axis (X) of the metering section.

Figure 4 shows a cross sectional view of the cooling hole of Figure 3. In exemplary embodiments, metering section 114 is inclined with respect to the inner wall surface 102. The detail of the sized of these sections is exemplary, and this application would extend to any number of sizes and orientations of the several distinct sections.

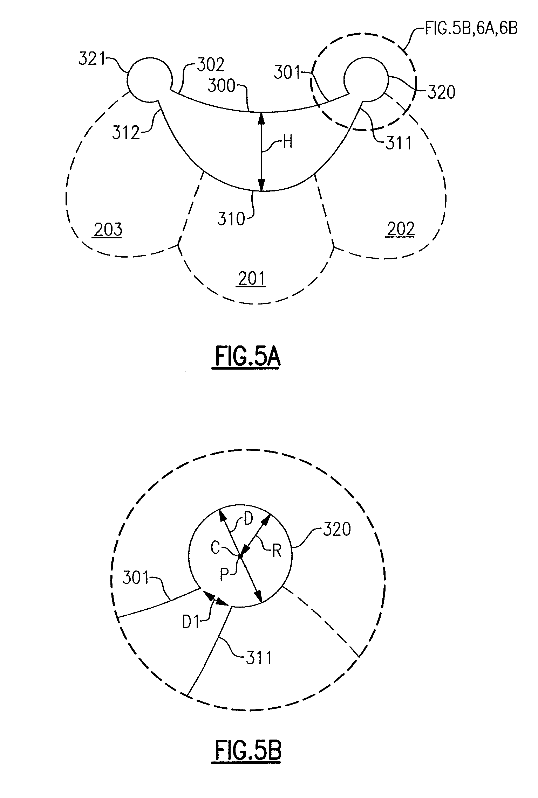

Figure 5A and 5B show a cross sectional view of the metering section 114 of the cooling hole 106 of Figure 3. Metering section 114 is adjacent to and downstream from inlet 108 and controls (meters) the flow of air through cooling hole 106. In exemplary embodiments, metering section 114 has a substantially constant flow area from inlet 108 to diffusing section 112.

Metering section 114 has a substantially convex first surface 300 with first end 301 and second end 302, and a substantially concave second surface 310, with first end 311 and second end 312. In one example, convex first surface 300 and concave second surface 310 are both arcuate surfaces. The distance between an apex of convex first surface 300 and an apex of concave second surface 310 defines dimension H. Point P is the point at which convex first surface 300 and concave second surface 310 would intersect.

An arcuate channel 320 connects convex first surface 300 and concave second surface 310 at first ends 301 and 311, and has a radius R. A second arcuate channel 321 connects convex first surface 300 and concave second surface 310 at second ends 302 and 312. Arcuate channels 320 and 321 may have the same size and shape. In another example, arcuate channels 320 and 321 have a different size. In another example, arcuate channels 320 and 321 have a different shape. In one embodiment, point P is located at a center C of arcuate channel 320. These arcuate channels may be laser drilled, for example. In the exemplary embodiment, metering section 114 has a "clown mouth" shaped cross-section.

In the exemplary embodiment, radius R is smaller than distance H. In one embodiment, distance H is greater than 5 mils (0.127 mm). In another embodiment, distance H is smaller than 50 mils (1.27 mm). In yet another embodiment, distance H is between 5 (0.127mm) and 50 mils (1.27 mm).

In the exemplary embodiment, convex first surface 300 is a top surface and concave second surface 310 is a bottom surface of metering section 114 relative to the orientation of Figure 5A. In this configuration, concave second surface 310 is directly adjacent lobes 201, 202, 203 of diffusing section 112 and convex first surface 300 is spaced apart from lobes 201, 202, 203 at the transition from metering section114 to diffusing section 112. In another exemplary embodiment, convex first surface 300 is a bottom surface and concave second surface 310 is a top surface of metering section 114. As can be seen in Figure 5B, first ends 301 and 311 converge until they meet arcuate channel 320, and define a first dimension D₁. The first dimension D₁ is the narrowest portion of metering section 114. Arcuate channel 320 has a diameter D that is greater than first dimension D₁. In one embodiment, a ratio of diameter D to first dimension D₁ is greater than 1.0. In another embodiment, a ratio of diameter D to first dimension D₁ is greater than 1.0 and less than or equal to 10.

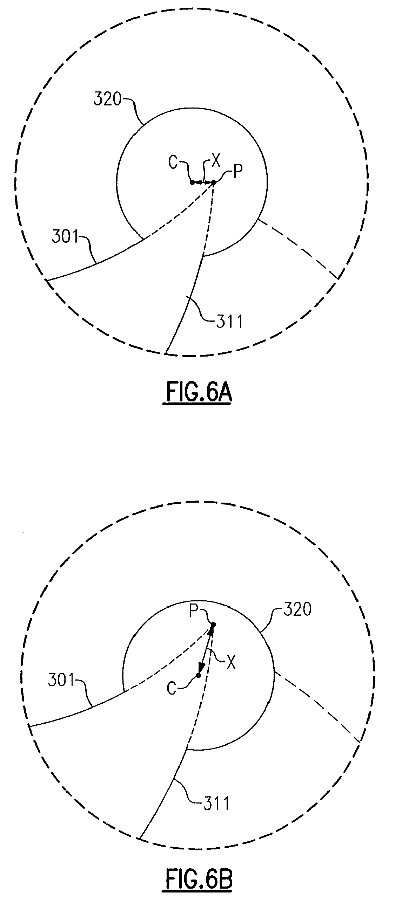

Figures 6A and 6B show another embodiment of the cross-sectional view of the corner of a metering portion. In these illustrated embodiments, the center C of arcuate channel 320 is not centered on point P. The offset distance between the point P and the center C defines dimension X. In one embodiment, X is less than a radius R of channel 320.

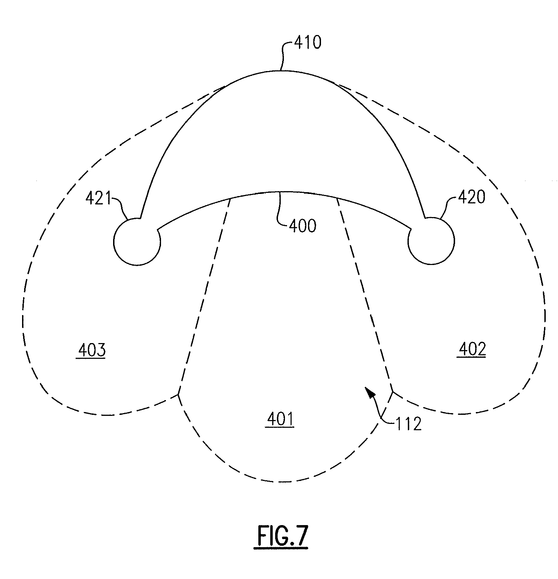

Figure 7 shows another embodiment of cross-sectional view of a metering portion. In the illustrated embodiment, convex first surface 400 and concave second surface 410 have arcs extending away from diffusing section 112. In this configuration, convex first surface 400 is adjacent lobes 401, 402, 403 of diffusing section 112, and concave second surface is spaced apart from lobes 401, 402, 403, such that it is opposite convex first surface 400. In this example, arcuate channels 420 and 421 are through lobes 402, 403 in diffusing section 112.

First and second surfaces 300 and 310 (or 400 and 410) are curved to allow the cooling air flowing through cooling hole 106 to fill the metering section 114 and provide better attachment in the diffusing section 112. Better fill characteristics of the cooling air as it expands along diffusing section 112, lowers the propensity of flow separation of cooling air along diffusing section 112 due to overexpansion and flow voracity.

Component wall 100 is subjected to very high temperatures during gas turbine engine operation. Within cooling hole 106, the portions where the convex first surface 300 and the concave second surface 310 of the metering section 114 converge are subjected to high thermo-mechanical stress. Arcuate channels 320, 321 increase the thermo-mechanical fatigue tolerance at these areas with higher stress concentrations.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A gas turbine engine component (80; 84) providing a cooling hole (82; 86; 106), the component comprising:
a metering section (114) extending within said component (80; 84), said metering section (114) comprising:
a convex first surface (300; 400) with a first end (301) and a second end (302);
a concave second surface (310; 410) with a first end (311) and a second end (312); and
a first arcuate channel (320; 420) connecting said first end (301) of said convex first surface (300; 400) and said first end (311) of said concave second surface (310; 410) and defining a dimension (D₁), wherein said dimension (D₁) is smaller than a diameter (D) of said first arcuate channel (320; 420).

2. The component (80; 84) of claim 1, wherein said metering section (114) further comprises a second arcuate channel (321; 421) connecting said second end (302) of said convex first surface (300; 400) and said second end (312) of said concave second surface (310; 410).

3. The component (80; 84) of claim 2, wherein said first arcuate channel (320; 420) and said second arcuate channel (321; 421) have a different size or shape.

4. The component (80; 84) of any of claims 1 to 3, wherein said convex first surface (300; 400) and said concave second surface (310; 410) have differing curvature.

5. The component (80; 84) of any preceding claim, wherein said metering section (114) has a generally constant cross-section.

6. The component (80; 84) of any preceding claim, wherein the cooling hole (82; 86; 106) further comprises a diffusing section (112) downstream of said metering section (114).

7. The component (80; 84) of claim 6, wherein said diffusing section (112) comprises multiple lobes (201, 202, 203; 301, 302, 303; 401, 402, 403).

8. The component (80; 84) of any preceding claim, wherein the cooling hole (82; 86; 106) is located on a component (80; 84) selected from the group consisting of blade airfoils, vane airfoils, blade platforms, vane platforms, combustor liners, blade outer air seals, blade shrouds, augmentors and endwalls.

9. The component (80; 84) of any preceding claim, wherein a center (C) of said first arcuate channel (320; 420) is offset from a point (P) where said convex first surface (300; 400) and said concave second surface (310; 410) would intersect.

10. The component (80; 84) of any preceding claim, wherein a distance between an apex of said convex first surface (300; 400) and an apex of said concave second surface (310; 410) defines a second dimension (H), and wherein said second dimension (H) is greater than a radius (R) of said first arcuate channel (320; 420).

11. The component (80; 84) of claim 9, wherein a distance between said center (C) of said first arcuate channel (320; 420) and said point (P) where said convex first surface (300; 400) and said concave second surface (310; 410) would intersect defines a third dimension (X), and wherein said third dimension (X) is smaller than a radius (R) of said first arcuate channel (320; 420).

12. A gas turbine engine wall (100) comprising:
first and second surfaces (102, 104);
an inlet (108) at the first surface (102)
an outlet (110) at the second surface (104)
a metering section (114) commencing at the inlet (108), the metering section (114) comprising:
a first arcuate surface (300; 400);
a second arcuate surface (310; 410); and
a side portion having an arcuate channel (320; 420) connecting said first arcuate surface (300; 400) and said second arcuate surface (310; 410) and defining a dimension (D₁), wherein said dimension (D₁) is smaller than a diameter (D) of said arcuate channel (320; 420); and
a diffusing section (112) in communication with the metering section (114) and terminating at said outlet (110).

13. The wall (100) of claim 12, wherein said first arcuate surface (300; 400) and said second arcuate surface (310; 410) have differing curvature.

14. The wall (100) of claim 12 or 13, wherein said diffusing section (112) comprises multiple lobes (201, 202, 203; 301, 302, 303; 401, 402, 403), and wherein said second arcuate surface (310; 410) is directly adjacent said lobes (201, 202, 203; 301, 302, 303; 401, 402, 403) at a transition from said metering section (114) to said diffusing section (112).

15. The wall (100) of claim 14, wherein said arcuate channel (320; 420) extends through one of said multiple of lobes (201, 202, 203; 301, 302, 303; 401, 402, 403).
